# EUROPÄISCHE PATENTSCHRIFT

(11) **EP 0 941 031 B1**
(45) Veröffentlichungstag und Bekanntmachung des Hinweises auf die Patenterteilung: **07.05.2003**
(21) Anmeldenummer: 98937387.3
(22) Anmeldetag: 19.08.1998
(51) Int. Cl.: A23N 17/00

(54) **VORRICHTUNG ZUM BEARBEITEN VON NAHRUNGS- ODER FUTTERMITTELN**
DEVICE FOR PROCESSING FOOD OR FODDER
DISPOSITIF POUR TRAITER DES PRODUITS ALIMENTAIRES OU DU FOURRAGE

(30) Priorität: 01.10.1997 DE 19743470
(43) Veröffentlichungstag der Anmeldung: 15.09.1999
(73) Patentinhaber: Bühler AG, 9240 Uzwil (CH)
(72) Erfinder: BERDAIS, Karl-Heinz, D-78467 Konstanz (DE); MEYER, Markus, CH-9322 Egnach (CH); RUTISHAUSER, Stefan, CH-9000 St. Gallen (CH)
(86) Internationale Anmeldenummer: CH9800351
(87) Internationale Veröffentlichungsnummer: WO99017625

(56) Entgegenhaltungen:
- DE-A- 2 621 266
- DE-A- 3 117 023
- GB-A- 2 030 463
- US-A- 4 001 452
- US-A- 4 161 139
- US-A- 4 752 139
- US-A- 4 775 239
- US-A- 4 989 504
- US-A- 5 161 888
- US-A- 5 460 448

## Beschreibung

Die vorliegende Erfindung betrifft eine Vorrichtung nach dem Oberbegriff des Anspruches 1.

Aus der US-A-4,752,139 ist ein Vorkonditionierer für einen Extruder bekannt. Der Vorkonditionierer besteht aus einer grossen und einer kleinen Kammer, die jeweils eine separate Mischwelle mit Schlagelementen aufweisen. Die Drehzahl der Mischwelle in der kleinen Kammer ist grösser als die Drehzahl der anderen Mischwelle, so dass das Produkt verhältnismässig länger in der grossen Kammer verbleibt. Nach der US-A-4,752,139 gelangt das Produkt zuerst in die kleine Kammer, wo es stark vermischt wird, danach in die grosse Kammer und anschliessend wieder in die kleine Kammer, woraus das Produkt zu einem Extruder gelangt. Infolge der Tatsache, dass die beiden Kammern als Mischkammern dienen, ist die tatsächliche Verweilzeit verschiedener Teile des zu bearbeitenden Gutes schwer im voraus zu bestimmen, d.h. es wird Teile geben, welche länger bearbeitet wurden und Teile, die nur eine kurze Behandlungszeit durchlaufen.

Die US-A- 4,161,139 beschreibt einen Konditionierer für die Herstellung von Tierfutter. Bei diesem Konditionierer sind drei Behälter parallel zueinander und beanstandet angeordnet, wobei sich ihre Achsen horizontal erstrecken. Eine oben angeordnete Kammer enthält ein Rührwerkzeug, das sich innerhalb der oberen Kammer erstreckt und dazu dient, das Material durch den Behälter zu transportieren. Unterhalb des oberen Behälters befinden sich zwei weitere voneinander getrennte Behälter, in denen jeweils eine Förderschraube vorgesehen ist, die zum Transportieren des Materials durch diese beiden Behälter dient.

Die GB-A-2,030,463 beschreibt einen Mischer für Fleisch- und andere Lebensmittelprodukte, insbesondere für die Herstellung pastenartiger Produkte als Füllmaterial in Lebensmittelprodukten. Dieser Mischer enthält zwei parallel nebeneinander angeordnete Tröge, in denen jeweils ein Rotor mit Blättern enthalten ist. Die beiden Tröge mit ihrem jeweiligen Rotor sind so angeordnet, dass die Blätter im Betrieb ineinander greifen.

In der US-A-5,460,448 ist auch ein Vorkonditionierer mit zwei ineinandergreifende Mischkammern offenbart. Die an den Wellen in den jeweiligen Kammern angeordneten Mischwerkzeuge sind so angeordnet, dass sie einmal in die eine und dann in die andere Richtung fördern, wodurch zwar eine gute Mischwirkung, aber eine schlechte Einstellung der Verweildauer resultiert. Hier, wie auch bei der US-A-4,752,139 erfolgt das Mischen hauptsächlich im zentralen Bereich zwischen den Kammern. Ähnlich ist der Vorkonditionierer nach der US-A-5,161,888 mit zwei miteinander in Verbindung stehenden Mischkammern.

Eine Vorrichtung der im Oberbegriff des Anspruches 1 genannten Art ist beispielsweise in Form einer Vorkonditioniereinrichtung in der US-A-4,001,452 beschrieben. Darin wird eine Vorkonditioniereinrichtung in Kombination mit einer Extrusionsein richtung (im allgemeinsten Sinne), nämlich einer Futterwürfelpresse verwendet, doch ist natürlich der Anwendungsbereich nicht auf eine solche Art von Extrusionseinrichtung beschränkt, vielmehr sind Einsatzmöglichkeiten überall dort gegeben, wo Nahrungs- oder Futtermittel, insbesondere Nahrungsmittel mit hohem Anteil von Mehl, z.B. in Samen- und Getreidekörnern, in Form von Flocken etc. zu einem Endprodukt zu verarbeiten sind. Diese Ingredienzen werden zuerst mit Wasser vermischt und mit Dampf behandelt, bevor sie weiterverarbeitet werden.

Die bekannte Vorrichtung besteht aus zwei Kammern. In der einen Kammer ist eine Welle mit Mischwerkzeugen angeordnet, wogegen die nachgeschaltete Kammer als Verweilkammer dient und daher nur eine Förderschnecke beinhaltet. Durch diese Verteilung der Aufgaben, werden zunächst die Ingredienzen gründlich gemischt und anschließend in der Verweilzone für ein verlängertes gegenseitiges Einwirken gesorgt. Nachteilig an dieser Anordnung ist, daß die Verwendung einer einzigen Förderschnecke zu einer schubweisen Belieferung der nachgeschalteten Extrusionseinrichtung führt, denn es hat sich gezeigt, daß das Material gegenüber der Förderschnecke einem Schlupf unterworfen ist. Dabei sammelt sich erst Material vor dem Ausgangsende der Förderschnecke an, bevor es schwallartig aus der Vorrichtung austritt. Gerade dann, wenn aber die nachgeschaltete Einrichtung von einem Extruder (im engeren Sinne dieses Begriffes) gebildet wird, hat dies zur Folge, daß der Extruder ungleichmäßig beschickt wird, d.h. nicht voll ausgelastet gefahren werden kann. Darüber hinaus führt das stoßweise Austragen des Gutes aus der Verweilzone zu einer ungleichmäßigen Behandlung des Gutes.

Dies ist im Prinzip auch bei der US-A-4,161,139 der Fall, wo erst eine Mischkammer angeordnet ist, dann aber diese Mischkammer das Gut in zwei nebeneinander in einem Abstand gelegene, gegenüber der Mischkammer relativ große Verweilkammern mit je einer Förderschnecke ausbringt. Da die Mischkammer nur klein ist, gelangt in jede Verweilkammer nur ein sehr kleiner Teil des gemischten Gutes. Offenbar wollte man dabei eine Vergleichmäßigung der Förderung dadurch herbeiführen, daß man hoffte, die geförderten schwallartigen Mengen des Gutes würden wohl nicht immer zur gleichen Zeit austreten, so daß sich insgesamt ein Ausgleich der Fördermenge ergeben könnte. Dies ist, wenn dies überhaupt die Absicht war, eine vom statistischen Standpunkt eine falsche Kalkulation, weil eine Vergleichmäßigung der Fördermengen zu Zeiten wohl gegeben sein kann, zu Zeiten aber die schwallartigen Gutmengen gerade gleichzeitig in die nächste Einrichtung gefördert werden, wobei sich der Verungleichmäßigungseffekt sogar noch addiert. Auch vom Standpunkt der gewünschten Vorkonditionierung ist die bekannte Vorrichtung wenig zweckmäßig, weil der Durchmischung nur wenig Raum eingeräumt wird, so daß in den beiden voneinander unabhängigen Verweilkammern teilweise nur mangelhaft gemischtes Gut vorliegt.

Es ist also ersichtlich, daß man den verschiedenen Anforderungen nach einer kurzen, aber gründlichen Durchmischung, einer ausreichend gleichmäßigen Verweilzeit und einer möglichst gleichmäßigen Weiterförderung des vorkonditionierten Gutes nur schwer gerecht werden kann. Daneben stellt sich noch ein zusätzliches Problem dadurch, daß bei der Herstellung von Nahrungs- und Futtermitteln stets hygienische Bedingungen gesichert werden müssen. Diese sind aber bei den bekannten Vorrichtungen nur durch immer wiederkehrendes Abschalten der Maschine zu relativ zeitaufwendigen Reinigungsvorgängen möglich, was zu heute kaum mehr hinnehmbaren Stillstandszeiten führt.

Demgemäß liegt die Aufgabe der Erfindung daran, eine Vorrichtung der eingangs genannten Art so auszubilden, daß sie möglichst allen oben aufgezählten Anforderungen gerecht wird. Diese Aufgabe wird durch die kennzeichnenden Merkmale des Anspruches 1 gelöst.

Wie bei der US-A-4,161,139 ist die Mischkammer oberhalb der Verweilkammer angeordnet, die zwei Wellen aufweist. Der wesentliche Unterschied ist jedoch, daß nicht zwei gesonderte Verweilkammern vorgesehen sind, sondern die Werkzeuge beider Wellen zum Fördern ineinandergreifen. Die Tatsache, daß nun zwei Wellen beim Fördern zusammenwirken, führt zu einer gleichmäßigen, im wesentlichen schlupflosen Förderung, wie dies von Doppelschnecken-Extrudern bekannt ist, so daß einerseits die jeweils nachgeschaltete Einrichtung, z.B. ein Extruder, gleichmäßig beliefert wird, voll ausgelastet werden kann und somit insgesamt eine Produktionssteigerung erzielt wird. Anderseits führt die gleichmäßige Förderung nun auch zu einer gleichmäßigeren Vorkonditionierung, was besonders bei Nahrungsmitteln zu einer gleichmäßigen Geschmacksentwicklung führt.

Die Tatsache, daß die Werkzeuge der Wellen ineinandergreifen, hat aber auch noch einen anderen vorteilhaften Effekt, nämlich den einer laufenden Selbstreinigung der Werkzeuge, so daß Hygieneprobleme leichter ausgeschaltet sind und Stillstandszeiten zu Reinigungszwecken reduziert werden können. Das weitere Merkmal, daß es sich nämlich um Werkzeuge zum Fördern handelt, sichert aber eben die angestrebte relativ gleichmäßige Verweilzeit.

Insbesondere wenn die Merkmale des Anspruches 4 verwirklicht werden, ergibt sich ein ausgewogenes Verhältnis von Misch- und Verweilzeit. Dies kann aber gegebenenfalls auch schon allein durch die Merkmale des Anspruches 2 erreicht werden, da Paddeln neben der Förderwirkung doch auch eine gewisse Mischwirkung ausüben.

Die Erfindung wird nachfolgend anhand eines in der Zeichnung schematisch dargestellten Ausführungsbeispieles näher erläutert. Es zeigen:
- Fig. 1: eine Seitenansicht eines ersten Ausführungsbeispieles, wozu
- Fig. 1A: eine Ausführungsvariante veranschaulicht;
- Fig. 2: eine Draufsicht auf Fig. 1 bei über der Verweilkammer abgenommenem Gehäuse, und
- Fig. 3: eine Frontansicht des Vorkonditionierers mit abgenommener Front-gehäusewand sowie eines darunterliegenden Doppelschneckenextruders nach Abnahme von dessen die Produktform bestimmenden Matrize.

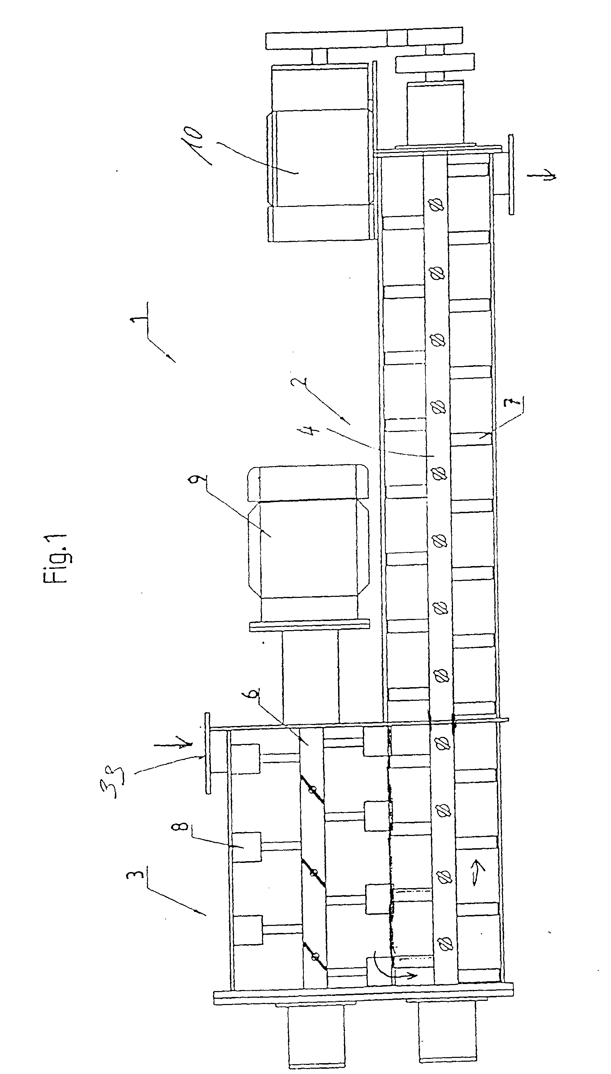

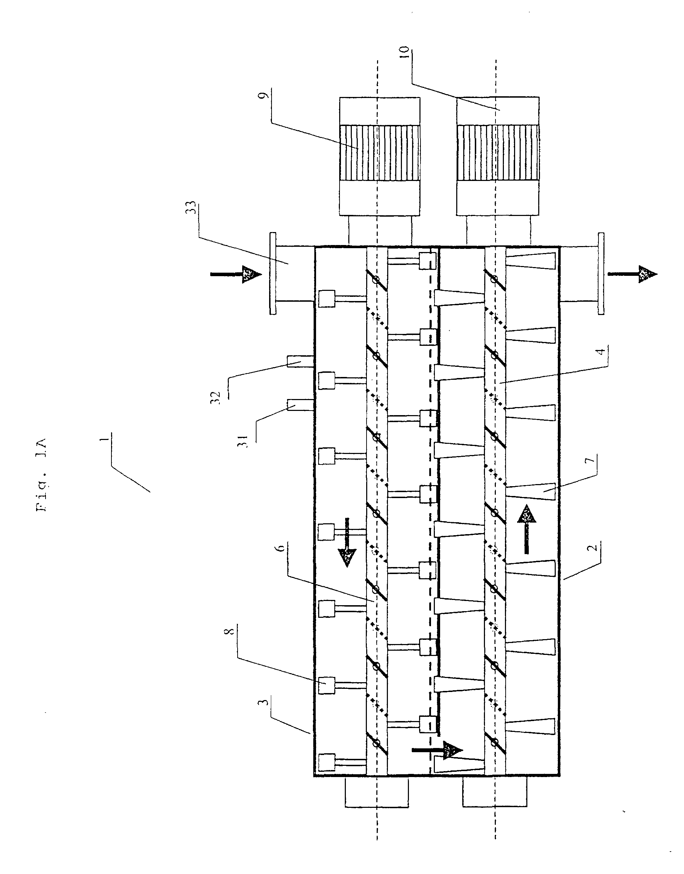

Fig. 1 zeigt einen Vorkonditionierer 1 nach der Erfindung, bei dem der Produktfluß durch Pfeile angedeutet ist. Der Vorkonditionierer 1 besteht aus einer relativ kurzen Mischkammer 3, worin eine Mischwelle 6 mit Mischwerkzeugen 8 versehen ist, und einer relativ langgestreckten Verweilkammer 2. In der Mischkammer 3 wird in einer ersten Mischphase ein Rohprodukt, z.B. Getreidemehl, mit mehreren Zusätzen wie Fette, Öle, Aromastoffe, Wasser, Wasserdampf, Dispersionen oder Pigmenten stark vermischt und/oder erwärmt. Daher kann die Mischkammer 3 auch gleich zu Anfang, d.h. im Bereiche eines Einlasses 33, Zufuhrrohre 31 und 32 zur Zufuhr fluider Ingredienzen, wie Wasserdampf und Melasse od.dgl. aufweisen.

Es ist ersichtlich, daß die Mischwerkzeuge 8 als am äußeren Ende von Armen 8' angeordnete Paddeln ausgebildet sind, so daß sich ihre Wirkung an sich nur auf den Rand- bzw. Umfangsbereich der Mischkammer 3 erstreckt. Dies kann zwei Gründe haben. Entweder sind diese Paddeln entsprechend der DE-C-31 17 023 nach drei Ebenen hin unter einem Winkel angeordnet, so daß das Mischgut axial und radial nach innen geworfen und so durchmischt wird, und/oder die Mischerwelle 6 verursacht eine so hohe Umfangsgeschwindigkeit der Paddeln 8, daß das Mischgut praktisch in einen fluidisierten Zustand versetzt wird, wobei sich infolge der Fliehkraft im Bereiche der Paddeln ein Ring fluidisierten Materials bildet. Der Inhalt der genannten DE-C-31 17 023 soll hier durch Bezugnahme als geoffenbart gelten.

Die Anordnung radial relativ kurzer Paddeln 8 an den relativ langen Armen 8' läßt auch im radial weiter innen gelegenen Bereich mehr von Einbauten freien Raum für die freie Durchmischung des Gutes. Dies ermöglicht es zusammen mit der genannten Fluidisierung, daß das feste Produkt von allen Seiten her mit Feuchtigkeit, Dampf, Flüssigkeit bzw. anderen Zusatzstoffen in Kontakt gebracht wird. Zusätzlich ist die Anordnung vorteilhaft so, daß das Verhältnis der Drehzahlen der Rotoren der Mischkammer 3 und der Verweilkammer 2 im Bereiche von 15:1 bis 7:1, bevorzugt um 10:1 liegt, wobei es bevorzugt ist, wenn die Paddeln 8 eine Umfangsgeschwindigkeit von 7 bis 15 m/s, vorzugsweise um 10 m/s erreichen.

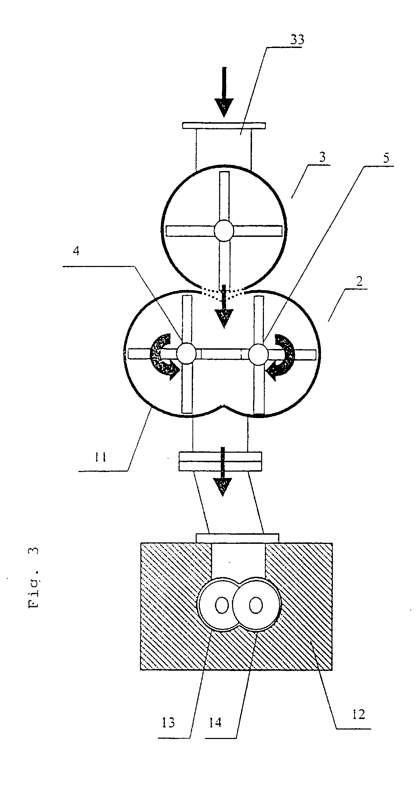

An Hand der Fig. 1A soll gezeigt werden, daß die axiale Länge von Misch- und Verweilkammer, auch relativ zueinander, je nach den zu erwartenden Verhältnissen im Betrieb und dem Anwendungsfall unterschiedlich und gegebenenfalls durch modularen Aufbau anpassbar sein kann. Beispielsweise könnte die Mischkammer 3 einen relativ größeren Durchmesser besitzen als die darunter liegende Kammer 2; es kann aber auch ein Verhältnis zweckmäßig sein, wie es aus Fig. 3 hervorgeht.

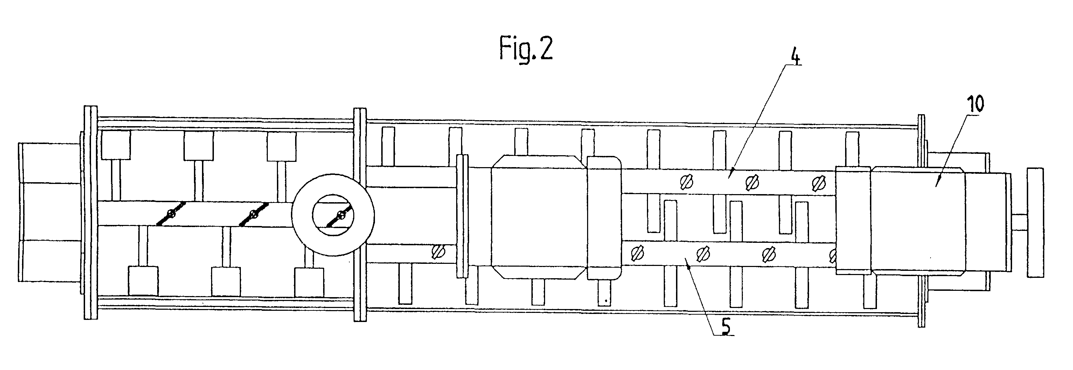

Wie aus den Fig. 1 und 1A ersichtlich, ist die Verweilkammer 2 mit Förderpaddeln 7 ausgestattet, die einem doppelten Zwecke dienen: Einerseits besorgen sie eine verläßliche Förderung, hauptsächlich zwischen zwei Förderwellen 4 und 5 (vgl. Fig. 2), wie auch durch die Gutanhäufung 11 in Fig. 3 angedeutet ist. Anderseits lassen sie dem Gut auch die Möglichkeit des Ausweichens, was zu einer weiteren Vermischung und zu einer vollständigen Homogenisierung führt. Dies mag ein Grund sein, warum die Mischkammer 3 relativ kurz bemessen sein kann (Fig. 1). Bei zu Inhomogenitäten neigendem Gut kann aber eine längere Mischkammer nach Fig. 1A von Vorteil sein.

Außerdem ist besonders aus Fig. 2 ersichtlich, daß die Werkzeuge 7 eng aneinander ineinandergreifen, so daß daran hängendes Gut abgestreift und so die Paddeln gereinigt werden (Selbstreinigungseffekt). Dies kommt den geforderten Hygienebedingungen ebenso entgegen, wie der Forderung nach einer gleichmäßigen Verweilzeit, weil länger als erwünscht in der Verweilkammer 2 verbliebenes Gut einerseits dem Bakterienbefall ausgesetzt sein kann, anderseits durch die überlange Behandlung den Geschmack beeinträchtigen kann. Die Wellen 4 bis 6 werden von Motoren 9 bzw. 10 angetrieben, die die oben besprochenen Drehzahlen und Umfangsgeschwindigkeiten hervorzurufen im Stande sind.

Es versteht sich, daß es im Rahmen der Erfindung durchaus möglich wäre, etwa die Mischkammer 3 zu verlängern, dafür aber die Verweilkammer 2 als reine Förderkammer, aber mit zwei Förderschnecken, auszubilden. Bevorzugt ist jedoch die dargestellte Ausführungsform mit Paddeln.

Wie Fig. 3 zeigt, wird das vorkonditionierte Produkt bevorzugt einem Extruder 12 zugeführt, der erfindungsgemäß gleichmäßiger ausgelastet wird. Dieser Extruder 12 ist vorteilhaft, wie dargestellt, ein Doppelschneckenextruder mit zwei ineinandergreifenden Schnecken 13, 14. Solche Schnecken könnten auch in der Verweilkammer 2 als Förderorgane dienen. Auch sei erwähnt, daß die Drehzahl der in Fig.2 dargestellten Wellen 4 und 5 ist vielfach geringer ist als die Drehzahl der in Fig.1 ersichtlichen Welle 6, so daß das Produkt längere Zeit in der Verweilkammer verbleibt. Damit kann z.B. ein Durchtränken der Feuchtigkeit in das vermischte Produkt erhöht werden. Ferner können Enzyme deaktiviert werden und der pH-Wert abhängig vom Produkt angepaßt bzw. angeglichen werden. Ferner wird, wie oben bereits erwähnt, der Geschmack des Endproduktes verbessert. Dies ist einerseits für Nahrungsmittel von Bedeutung, anderseits ergibt die erfindungsgemässe Ausbildung auch im Bereiche der Futtermittelindustrie große Vorteile, etwa infolge der Verbesserung der Konsistenz der erzielbaren Pellets, beispielsweise von Fischfutterpelltes, bei denen die Sinkgeschwindigkeit und die Konsistenz die Langlebigkeit solcher Pellets im Wasser erheblich beeinflussen.

## Patentansprüche

1. Vorrichtung zum Bearbeiten von Nahrungs- oder Futtermitteln, mit einer Konditioniereinrichtung (2, 3), die eine Mischkammer (3) oberhalb einer Verweilkammer (2) umfasst, welche miteinander in Verbindung stehen, wobei jede Kammer eine Rotorwelle (4, 6) aufweist, die sich längslaufend in der Kammer erstreckt und jeder Rotor (4, 6-8) rund um die Welle (4, 6) mit entsprechenden Werkzeugen (7, 8) versehen ist, **dadurch gekennzeichnet, dass** die Verweilkammer (2) eine zweite Welle (5) aufweist, wobei die Werkzeuge (7) der beiden Wellen (4, 5) der Verweilkammer (2) zum gemeinsamen Fördern ineinander greifen und das Verhältnis der Drehzahlen der Rotoren (4-6) der Mischkammer (3) und der Verweilkammer (2) im Bereich von 15:1 bis 7:1, bevorzugt um 10:1 liegt.

2. Vorrichtung nach Anspruch 1, **dadurch gekennzeichnet, dass** die Werkzeuge (7) der Verweilkammer (2) Förderpaddeln umfassen.

3. Vorrichtung nach Anspruch 1 oder 2, **dadurch gekennzeichnet, dass** der Konditioniereinrichtung (2, 3) ein Extruder (12), insbesondere mit mindestens zwei, bevorzugt ineinander greifenden, Schnecken (13, 14), nachgeschaltet ist.

4. Vorrichtung nach einem der vorhergehenden Ansprüche, **dadurch gekennzeichnet, dass** die Werkzeuge (8) der Mischkammer (3) eine Umfangsgeschwindigkeit von 7 bis 15 m/s, vorzugsweise um 10 m/s erreichen.

5. Vorrichtung nach einem der vorhergehenden Ansprüche, **dadurch gekennzeichnet, dass** die Werkzeuge (8) der Mischkammer (3) als an den freien Enden von Armen (8') befestigte Paddeln ausgebildet sind, wobei bevorzugt radial relativ kurze Paddeln (8) an relativ langen Armen (8') befestigt sind.

## Claims

1. A device for processing foodstuffs or feedstuffs, with a conditioner device (2, 3), which comprises a mixing chamber (3) above a retention chamber (2), which are interconnected, wherein each chamber has a rotor shaft (4, 6) that extends lengthwise in the chamber, and each rotor (4, 6-8) is provided with corresponding implements (7, 8) around the entire shaft (4, 6), **characterized in that** the retention chamber (2) has a second shaft (5), wherein the implements (7) of the two shafts (4, 5) of the retention chamber (2) intermesh for joint conveyance, and the ratio between the speed of the rotors (4 - 6) of the mixing chamber (3) and the retention chamber (2) ranges from 15:1 to 7:1, preferably measuring around 10:1.

2. The device according to claim 1, **characterized in that** the implements (7) of the retention chamber (2) encompass conveyor paddles.

3. The device according to claim 1 or 2, **characterized in that** an extruder (12), in particular with at least two, preferably intermeshing, screws (13, 14), is placed downstream from the conditioner device (2, 3).

4. The device according to one of the preceding claims, **characterized in that** the implements (8) of the mixing chamber (3) reach a circumferential velocity of 7 to 15 m/s, preferably of around 10 m/s.

5. The device according to one of the preceding claims, **characterized in that** the implements (8) of the mixing chamber (3) are designed as paddles attached to the free ends of arms (8'), wherein radially relatively short paddles (8) are preferably secured to relatively long arms (8').

## Revendications

1. Dispositif pour la transformation de produits d'alimentation humaine ou animale, avec une installation de conditionnement (2, 3) qui comprend une chambre de malaxage (3) au dessus d'une chambre de séjour (2), qui sont en liaison l'une avec l'autre, chaque chambre présentant un arbre à rotor (4, 6) qui s'étend longitudinalement dans la chambre et chaque rotor (4, 6 - 8) étant muni autour de l'arbre (4, 6) d'outillages correspondants (7, 8), **caractérisé en ce que** la chambre de séjour (2) présente un deuxième arbre (5), les outils (7) des deux arbres (4, 5) de la chambre de séjour (2) empiétant l'un dans l'autre pour assurer un convoyage en commun et le rapport des vitesses de rotation des rotors (4 - 6) de la chambre de malaxage (3) et de la chambre de séjour (2) se situant dans une plage de 15 :1 à 7 :1, de préférence autour de 10 :1.

2. Dispositif selon la revendication 1, **caractérisé en ce que** les outils (7) de la chambre de séjour (2) englobent des pales convoyeuses.

3. Dispositif selon la revendication 1 ou 2, **caractérisé en ce qu'**en aval de l'installation de conditionnement (2, 3), une extrudeuse (12), comportant notamment au moins deux vis sans fin (13, 14) empiétant de préférence l'une dans l'autre, est installée.

4. Dispositif selon une des revendications précédentes, **caractérisé en ce que** les outils (8) de la chambre de malaxage (3) atteignent une vitesse circonférentielle de 7 à 15 m/s, de préférence autour de 10 m/s.

5. Dispositif selon une des revendications précédentes, **caractérisé en ce que** les outils (8) de la chambre de malaxage (3) sont configurés comme des pales fixées aux extrémités libres de bras (8'), des pales de préférence relativement courtes (8) dans le sens radial étant fixées à des bras relativement longs (8').
